(19) Europäisches Patentamt
European Patent Office
Office européen des brevets

(11) Veröffentlichungsnummer: **0 201 006 A2**

# (12) EUROPÄISCHE PATENTANMELDUNG

(21) Anmeldenummer: **86105717.2**

(22) Anmeldetag: **25.04.86**

(51) Int. Cl.⁴: **C 07 F 9/38**, C 11 D 1/34, C 11 D 3/36, B 01 F 17/22

(30) Priorität: **04.05.85 DE 3516114**

(43) Veröffentlichungstag der Anmeldung: **12.11.86 Patentblatt 86/46**

(84) Benannte Vertragsstaaten: **BE CH DE FR GB IT LI NL SE**

(71) Anmelder: **Heiss, Bernhard Rudolf, Isabellastrasse 22, D-8000 München 40 (DE)**

(72) Erfinder: **Heiss, Lorenz, Dr., Stormstr. 39, D-6238 Hofheim a. Ts. (DE)**

## (54) 1-Acylamido-alkylphosphonsäuren und ihre Salze, Verfahren zu deren Herstellung und ihre Verwendung als Tenside.

(57) Die neuen 1-Acylamido-alkylphosphonsäuren werden durch die allgemeine Formel beschrieben

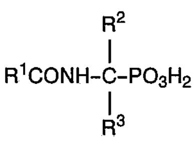

worin $R^1$ einen Alkyl(en)rest mit 2 bis 30 vorzugsweise 6 bis 20 Kohlenstoffatomen, in dem Wasserstoffatome durch Halogen substituiert sein können, einen Aryl- oder Aralkylrest mit jeweils 6 bis 20 Kohlenstoffatomen, einen Oxyalkyl(en)rest, einen Aminoalkyl(en)rest oder einen Polyalkoxyalkyl(en)rest, $R^2$ Wasserstoff oder einen Alkylrest mit 1 bis 6 Kohlenstoffatomen, $R^3$ einen Alkylrest mit 1 bis 16 Kohlenstoffatomen bedeuten und ihre Salze.

In einem Verfahren zur Herstellung dieser Verbindungen läßt man Acylamide mit Phosphortrihalogeniden und Aldehyden oder Ketonen vorzugsweise Alkylcarbonylen in Lösungsmitteln wie niedere Fettsäuren, Chlorkohlenwasserstoffen, Toluol, vorzugsweise Essigsäure bei etwa 10 bis 80 °C reagieren und hydrolysiert mit Wasser.

Verwendung finden diese Verbindungen bevorzugt als Tenside, vorzugsweise als Waschmittel, Netzmittel, Körperreinigungsmittel, Emulgatoren, Dispergiermittel, Textilhilfsmittel, Korrosionsschutzmittel, Metallbearbeitungsmittel, Schmiermittel.

EP 0 201 006 A2

ACTORUM AG

## Patentanmeldung

**1-Acylamido-alkylphosphonsäuren und ihre Salze, Verfahren zu deren Herstellung und ihre Verwendung als Tenside**

Es ist bekannt Acylamidomethylphosphonsäuren aus Acylamidomethylolverbindungen und Phosphortrihalogeniden entsprechend dem US-Patent Nr. 2 304 156 herzustellen.

Gegenstand der Erfindung sind neue 1-Acylamido-alkylphosphonsäuren der allgemeinen Formel

$$R^1CONH-\overset{\displaystyle R^2}{\underset{\displaystyle R^3}{\overset{|}{\underset{|}{C}}}}-PO_3H_2$$

worin $R^1$ eine Alkyl(en)rest mit 2 bis 30 vorzugsweise 6 bis 20 Kohlenstoffatomen,in dem Wasserstoffatome durch Halogen substituiert sein können, einen Aryl- oder Aralkylrest mit jeweils 6 bis20 Kohlenstoffatomen, einen Oxyalkyl(en)rest, einen Aminoalkyl(en)rest oder einen Polyalkoxyalkyl(en)rest, $R^2$ Wasserstoff oder einen Alkylrest mit 1 bis 6 Kohlenstoffatomen, $R^3$ einen Alkylrest mit 1 bis 16 Kohlenstoffatomen bedeuten und ihre Salze.

Geeignete Acylamide, die beispielsweise dafür Verwendung finden, sind Propionsäureamid, Isooctansäureamid, Laurinsäreamid, Kokosfettsäureamid, Talgfettsäureamid, Stearinsäureamid, Ölsäureamid, Chlorpropionsäureamid, p-Toluylsäureamid, Phenylessigsäureamid, Nonylphenoxyessigsäureamid, Carbamidsäurebutylester, Carbamidsäureoctadecylester, Octadecylharnstoff, Carbamidsäurepolyäthoxy-dodecylester.

Alkycarbonyle, die zum Beispiel infrage kommen, sind Aldehyde wie Butyraldehyd, Isononylaldehyd oder Ketone wie Aceton, Pentanon-3, Nonanon-4. Die erfindungsgemäßen 1-Acylamido-alkylphosphonsäuren werden hergestellt, indem man Acylamide mit Phosphortrihalogeniden vorzugsweise Phosphortrichlorid und Aldehyden oder Ketonen vorzugsweise Alkylcarbonylen in Lösungsmitteln wie niederen Fettsäuren, Chlorkohlenwasserstoffen, Toluol, vorzugsweise Essigsäure bei etwa 10 bis 80°C reagieren läßt und dann mit Wasser hydrolysiert. Die Isolierung erfolgt durch Kristallisation, Lösung im geeigneten Lösemittel und Abtrennung der wäßrigen Phase.

Von besonderem Interesse sind 1-(Acylamido)alkylphosphonsäuren, die in Form ihrer Salze Grenzflächenaktivität zeigen. Dies ist dann der Fall, wenn die Reste $R^1 + R^2 + R^3$ mindestens 6 Kohlenstoffatome aufweisen.

1-Acylamido-1-methyl-ethylphosphonsaure Alkanolaminsalze auf Basis von Isoalkansäureamiden mit 6 bis 13 Kohlenstoffatomen zeigen ausgeprägten Korrosionsschutz neben sehr guter Schmierwirkung auf Metallen, weshalb sie für Korrosionsschutzmittel und Metallbearbeitungsflüssigkeiten beispielsweise Kühlschmiermittel Verwendung finden können. Acylamidoalkylphosphonsaure Salze mit ausgeprägter Waschaktivität basieren auf Fettsäureamiden mit 8-18 Kohlenstoffatomen oder Carbamidsäureester der analogen Fettalkoholen, die auch oxäthyliert sein können. Als erfindungsgemäße Salze der Verbindungen sind beispielsweise zu nennen: Mono- und Dinatriumsalz, Mono- und Dikaliumsalz, Mono-und Diammoniumsalz, Magnesiumsalz, Calciumsalz, Triäthanolammoniumsalz. Für hautverträgliche Tenside mit guter Reinigungswirkung, wie sie bei der Körperpflege beispielsweise als Haar- und Badeshampoos Verwendung

finden, sind die Monosalze vorteilhaft, weil man mit ihnen schwach saure ph-Werte zwischen 5 bis 7 erhält, die den Säureschutzmantel der Haut erhalten.
1-Acylamido-1-methyl-ethylphosphonsaure Salze, die sich von Fettsäureamiden mit 12 bis 18 Kohlenstoffatomen wie beispielsweise Laurinsäureamid, Kokosfettsäureamid, Palmitinsäureamid, Stearinsäureamid,Ölsäureamid oder Talgfettsäureamid ableiten, zeigen hervorragende Effekte als Waschmittel, wobei neben ihrem ausgeprägten Schaumvermögen, vor allem ihr Netzvermögen und die Waschwirkung auf Baumwoll-Standardanschmutzung ohne Phosphatgerüst herausragt. Es werden Werte erhalten, die bei den üblichen Alkylbenzolsulfonaten nur durch Zusatz von Natriumtripolyphosphaten zu erzielen sind.

Beispiele:

1. 1-Dodecanoylamido-1-methyl-ethyl-phosphonsäure

40 g (0,2 Mol) Laurinsäureamid und 30 g (0,22 Mol) $PCl_3$ werden in 100 ml Eisessig gelöst. Man tropft bei 20 °C 15 g (0,26 Mol) Aceton zu und rührt bei 40°C sechs Stunden nach. Bei 40°C werden 100 ml Wasser zugetropft, eine Stunde nachgerührt, auf 0°C abgekühlt, mit Eiswasser frei von Chlorionen gewaschen, im Vakuumschrank über Phosphorpentoxyd bei 50°C getrocknet. Man erhält 57 g des Endproduktes (Ausbeute: 89%)
Schmelzpunkt: 117°C
Phosphorgehalt: 9,6% (Theorie 9,6%)
Säurezahl: 345

2. 1-Isononanoylamido-1-methyl-ethyl-phosphonsäure

31,4 g (0,2 Mol) Isononansäureamid und 30 g (0,2 Mol) $PCl_3$ werden in 80 g Eisessig gelöst. Bei 40°C werden 14 g (0,24 Mol) Aceton zugegeben, zwei Stunden bei 70°C gerührt, dann

100 ml Wasser zugetropft und eine Stunde bei 60°C nachgerührt. Man kühlt auf 0°C ab, saugt die ausgefallenen Kristalle ab, wäscht mit Eiswasser frei von Chlorionen und trocknet im Vakuum über Kaliumhydroxyd bei 50°C.
Ausbeute: 49g (86% der Theorie)
Schmelzpunkt: 149-154°C (aus 40%igem Äthanol umkristallisiert: 154°C)
Phosphorgehalt: 10,8% (umkristallisiert 11,1%; Theorie 11,1%)
Säurezahl: 390 (Theorie 400)

3. 1-Stearoylamido-1-methyl-ethyl-phosphonsäure

56 g (0,2 Mol) Stearinsäureamid und 33g (0,25 Mol) $PCl_3$ werden bei 40°C in 150 g Eisessig gelöst und 15 g (0,26 Mol) Aceton zugegeben. Man rührt bei 40°C acht Stunden nach, gibt 150 ml Wasser hinzu und rührt zwei Stunden nach. Man setzt Toluol und Isopropanol hinzu und trennt bei 60°C von der Wasserphase ab. Nachdem man Toluol abdestilliert hat, erhält man 75 g Endprodukt (92% der Theorie).
Phosphorgehalt: 7% (Theorie 7,6%)
Säurezahl: 258 (Theorie 276)
Setzt man an Stelle von Stearinsäureamid Ölsäureamid ein, so erhält man in einer Ausbeute von 80 g (100% der Theorie) 1-Oleoylamido-1-methyl-ethyl-phosphonsäure.
Phosphorgehalt: 7,2% (Theorie 7,7%)
Säurezahl: 268 (Theorie 278)

4. 1-Butylcarbamoyl-isononyl-phosphonsäure

38,7 g (0,33 Mol) Butylurethan und 45,2 g (0,33 Mol) $PCl_3$ werden in 66 g Eisessig gelöst und 46,8 g (0,33 Mol) Isononylaldehyd zugefügt. Man rührt zwei Stunden bei 80°C, gibt 200 ml Wasser zu und kocht eine Stunde unter Rückfluß. Nach Zugabe von 300 ml Toluol und Schütteln wird von der Wasserphase abgetrennt, das Lösemittel entfernt und das Produkt im Vakuum getrocknet.

Ausbeute: 88,6 g (83% der Theorie)
Schmelzpunkt: 110°C
Phosphorgehalt: 9% (Theorie 9,6%)
Säurezahl: 338 (Theorie 347)

5. 1-Phenylacetamido-1-methyl-ethyl-phosphonsäure

27 g (0,2 Mol) Phenylessigsäureamid und 30,2 g (0,22 Mol) $PCl_3$ werden in 80 g Eisessig gelöst. Bei 40°C tropft man 13,4 g (0,23 Mol) Aceton zu und rührt 6 Stunden bei 40°C, nach Zufügen von 80 ml Wasser eine Stunde bei 40°C. Man schüttelt mit 300 ml Äther, trennt ab, trocknet mit Natriumsulfat und entfernt das Lösemittel. Man erhält 48 g Endprodukt (93,5% d. Th.).
Phosphorgehalt: 11,1% (Theorie 12%)
Säurezahl: 420 (theorie 436)
Setzt man an Stelle von Phenylessigsäureamid p-Toluylsäureamid ein, so erhält man in einer Ausbeute von 42 g (82,5% der Theorie)
p-Toluylsäure-amido-1-methyl-ethyl-phosponsäure.
Phosphorgehalt: 11,6% (Theorie 12%)
Säurezahl: 419 (berechnet 436)
Schmelzpunkt: 193°C

6. 1-(Isotridecyloxy-ethoxy-ethyl-carbamoyl)-1-methyl-ethyl-phosphonsäure

66 g (0,2 Mol) Isotridecyl-oxy-ethoxy-ethyl-carbamat und 33 g (0,24 Mol) Phosphortrichlorid werden in 150 g Eisessig gelöst und 15 g (0,26 Mol) Aceton zugesetzt. Man rührt zwei Stunden bei 70 °C nach, gibt 150 ml Wasser hinzu und rührt bei 40 °C eine Stunde nach. Man setzt Toluol und Isopropanol hinzu und läßt bei 60 °C die Wasserphase abtrennen. Nach Entfernung der Lösemittel erhält man das Endprodukt in einer Ausbeute von 85 g (94% der Theorie).
Phosphorgehalt: 6,6% (Theorie 6,85%)
Säurezahl:238 (Theorie 248)

## Patentansprüche

1. 1-Acylamidoalkylphosphonsäuren der allgemeinen Formel

$$R^1CONH-\overset{R^2}{\underset{R^3}{C}}-PO_3H$$

worin $R^1$ einen Alkyl(en)rest mit 2 bis 30 vorzugsweise 6 bis 20 Kohlenstoffatomen, in denen Wasserstoffatome durch Halogen substituiert sein können, einen Aryl - oder Aralkylrest mit jeweils 6-20 Kohlenstoffatomen, einen Oxyalkyl(en)rest, einen Aminoalkyl(en)rest oder einen Polyalkoxyalkyl(en)rest, $R^2$ Wasserstoff oder einen Alkylrest mit 1 bis 6 Kohlenstoffatomen, $R^3$ einen Alkylrest mit 1 bis 16 Kohlenstoffatomen bedeuten und ihre Salze.

2. Verfahren zur Herstellung von 1-Acylamidoalkylphosphonsäuren nach Anspruch 1, dadurch gekennzeichnet, daß man Acylamide der Formel

$$R^1\,CONH_2$$

mit Phosphortrihalogeniden, vorzugsweise Phosphortrichlorid, und Carbonylen der Formel $R^2COR^3$ in Lösungsmitteln vorzugsweise Essigsäure bei 10 bis 80 °C umsetzt, mit Wasser behandelt und gegebenenfalls mit Lösungsmittel von der Wasserphase abtrennt oder auskristallisieren läßt.

3. Verwendung der Salze der Acylamidoalkanphosphonsäuren gemäß Anspruch 1 als Tenside, vorzugsweise als Waschmittel, Netzmittel, Körperreinigungsmittel, Emulgatoren, Dispergiermittel, Textilhilfsmittel, Korrosionsschutzmittel, Metallbearbeitungsmittel, Schmiermittel, Flotationshilfsmittel.